# EUROPEAN PATENT SPECIFICATION

(11) **EP 2 692 008 B1**
(45) Date of publication and mention of the grant of the patent: **24.10.2018**
(21) Application number: 12794790.1
(22) Date of filing: 28.03.2012
(51) Int. Cl.: H01M 8/0612, H01M 8/0662, H01M 8/0668, H01M 8/04007, H01M 8/124

(54) **SOLID-OXIDE FUEL CELL HIGH-EFFICIENCY REFORM-AND-RECIRCULATE SYSTEM**
FESTOXIDKRAFTSTOFFZELLE MIT HOCHEFFIZIENTEM REFORMIERUNGS- UND RÜCKZIRKULIERUNGSSYSTEM
SYSTÈME DE REFORMAGE ET DE RECYCLAGE À HAUT RENDEMENT D'UNE PILE À COMBUSTIBLE À OXYDE SOLIDE

(30) Priority: 31.03.2011 US 201113077066
(43) Date of publication of application: 05.02.2014
(73) Proprietor: General Electric Company, Schenectady, NY 12345 (US)
(72) Inventor: LEHAR, Matthew, Alexander, Niskayuna, NY 12309 (US); ALINGER, Matthew, Joseph, Niskayuna, NY 12309 (US); BIEDERMAN, Bruce, Philip, Niskayuna, NY 12309 (US); SHAPIRO, Andrew, Philip, Niskayuna, NY 12309 (US)
(74) Representative: Illingworth-Law, William Illingworth
(86) International application number: PCT/US2012/030816
(87) International publication number: WO 2013/025256

(56) References cited:
- EP-A2- 1 947 723
- JP-A- 2003 282 118
- US-A1- 2007 281 192
- US-A1- 2008 187 789

## Description

### BACKGROUND

This invention relates generally to combined cycle fuel cell systems, and more particularly to a solid-oxide fuel cell (SOFC) high-efficiency reform-and-recirculate system to achieve higher fuel cell conversion efficiencies than that achievable using conventional combined cycle fuel cell systems.

Fuel cells are electrochemical energy conversion devices that have demonstrated a potential for relatively high efficiency and low pollution in power generation. A fuel cell generally provides a direct current (dc) which may be converted to alternating current (ac) via for example, an inverter. The dc or ac voltage can be used to power motors, lights, and any number of electrical devices and systems. Fuel cells may operate in stationary, semi-stationary, or portable applications. Certain fuel cells, such as solid oxide fuel cells (SOFCs), may operate in large-scale power systems that provide electricity to satisfy industrial and municipal needs. Others may be useful for smaller portable applications such as for example, powering cars.

A fuel cell produces electricity by electrochemically combining a fuel and an oxidant across an ionic conducting layer. This ionic conducting layer, also labeled the electrolyte of the fuel cell, may be a liquid or solid. Common types of fuel cells include phosphoric acid (PAFC), molten carbonate (MCFC), proton exchange membrane (PEMFC), and solid oxide (SOFC), all generally named after their electrolytes. In practice, fuel cells are typically amassed in electrical series in an assembly of fuel cells to produce power at useful voltages or currents. Therefore, interconnect structures may be used to connect or couple adjacent fuel cells in series or parallel.

In general, components of a fuel cell include the electrolyte and two electrodes. The reactions that produce electricity generally take place at the electrodes where a catalyst is typically disposed to speed the reactions. The electrodes may be constructed as channels, porous layers, and the like, to increase the surface area for the chemical reactions to occur. The electrolyte carries electrically charged particles from one electrode to the other and is otherwise substantially impermeable to both fuel and oxidant.

Typically, the fuel cell converts hydrogen (fuel) and oxygen (oxidant) into water (byproduct) to produce electricity. The byproduct water may exit the fuel cell as steam in high-temperature operations. This discharged steam (and other hot exhaust components) may be utilized in turbines and other applications to generate additional electricity or power, providing increased efficiency of power generation. If air is employed as the oxidant, the nitrogen in the air is substantially inert and typically passes through the fuel cell. Hydrogen fuel may be provided via local reforming (e.g., on-site steam reforming) of carbon-based feedstocks, such as reforming of the more readily available natural gas and other hydrocarbon fuels and feedstocks. Examples of hydrocarbon fuels include natural gas, methane, ethane, propane, methanol, syngas, and other hydrocarbons. The reforming of hydrocarbon fuel to produce hydrogen to feed the electrochemical reaction may be incorporated with the operation of the fuel cell. Moreover, such reforming may occur internal and/or external to the fuel cell. For reforming of hydrocarbons performed external to the fuel cell, the associated external reformer may be positioned remote from or adjacent to the fuel cell.

Fuel cell systems that can reform hydrocarbon internal and/or adjacent to the fuel cell may offer advantages, such as simplicity in design and operation. For example, the steam reforming reaction of hydrocarbons is typically endothermic, and therefore, internal reforming within the fuel cell or external reforming in an adjacent reformer may utilize the heat generated by the typically exothermic electrochemical reactions of the fuel cell. Furthermore, catalysts active in the electrochemical reaction of hydrogen and oxygen within the fuel cell to produce electricity may also facilitate internal reforming of hydrocarbon fuels. In SOFCs, for example, if nickel catalyst is disposed at an electrode (e.g., anode) to sustain the electrochemical reaction, the active nickel catalyst may also reform hydrocarbon fuel into hydrogen and carbon monoxide (CO). Moreover, both hydrogen and CO may be produced when reforming hydrocarbon feedstock. Thus, fuel cells, such as SOFCs, that can utilize CO as fuel (in addition to hydrogen) are generally more attractive candidates for utilizing reformed hydrocarbon and for internal and/or adjacent reforming of hydrocarbon fuel.

The capability of a fuel cell to convert hydrocarbon fuel into electrical energy is limited by loss mechanisms within the cell that produce heat and by partial utilization of the fuel. Reforming of the hydrocarbon primary fuel occurs upstream of the fuel cell in a conventional combined cycle fuel cell system. Tail gas from the fuel cell including unburnt fuel and products of combustion are then sent to tailgas burners, the heat from which can be incorporated in a combined cycle system, sometimes into the fuel reformer. Present day examples of fuel cells routinely achieve about 50% conversion efficiency. Document EP 1 947 723 discloses a combined cycle fuel cell comprising a fuel cell, a hydrocarbon fuel reforming system; a fuel path configured to divert a first portion of the reformed fuel to the inlet of the anode; a cooler configured to remove heat from the residual portion of the reformed fuel.

In view of the foregoing, there is a need to provide a technique that further increases the plant efficiency of a combined cycle fuel cell system through increased fuel cell efficiency.

### BRIEF DESCRIPTION

An exemplary embodiment of the present invention comprises a combined cycle fuel cell comprising:
a fuel cell comprising an anode configured to generate a tail gas, the anode comprising an inlet and an outlet;
a hydrocarbon fuel reforming system configured to mix a hydrocarbon fuel with the fuel cell tail gas downstream of the fuel cell and to partly or fully convert the hydrocarbon fuel into hydrogen (H₂) and carbon monoxide (CO), and further configured to split the reformed fuel into a first portion and a residual portion;
a first Organic Rankine cycle (ORC) configured to remove heat from the first portion of the reformed fuel;
a fuel purification apparatus, wherein the first ORC and fuel purification apparatus are together configured to generate purified fuel via removal of water and carbon dioxide from the first portion of reformed fuel;
a recuperator configured to extract heat from the purified fuel and to transfer the extracted heat to the fuel and tail gas entering the reforming system;
a fuel path configured to divert the purified fuel to the inlet of the fuel cell anode;
a second ORC configured to remove heat from the residual portion of the reformed fuel and generate electrical power therefrom; and
a bottoming cycle comprising an external or internal combustion engine driven in response to the cooled residual portion of the reformed fuel exiting the second ORC.

### DRAWINGS

The foregoing and other features, aspects and advantages of the invention are apparent from the following detailed description taken in conjunction with the accompanying drawings in which like characters represent like parts throughout the drawings, wherein:
Figure 1 is a simplified diagram illustrating a combined cycle power plant that employs a solid-oxide fuel cell (SOFC) running on reformed fuel with recirculation in which a reformer feeds a reciprocating engine bottoming cycle according to one embodiment;
Figure 2 is a simplified diagram illustrating a combined cycle power plant that employs a solid-oxide fuel cell (SOFC) running on reformed fuel with recirculation in which a reformer feeds a reciprocating engine bottoming cycle according to another embodiment;
Figure 3 is a simplified diagram illustrating a combined cycle power plant that employs a solid-oxide fuel cell (SOFC) running on reformed fuel with recirculation in which a reformer feeds a reciprocating engine bottoming cycle according to yet another embodiment; and
Figure 4 is a simplified diagram illustrating a combined cycle power plant that employs a solid-oxide fuel cell (SOFC) running on reformed fuel with recirculation in which a reformer feeds a reciprocating engine bottoming cycle according to still another embodiment.

While the above-identified drawing figures set forth alternative embodiments, other embodiments of the present invention are also contemplated, as noted in the discussion. In all cases, this disclosure presents illustrated embodiments of the present invention by way of representation and not limitation. Numerous other modifications and embodiments can be devised by those skilled in the art which fall within the scope and spirit of the principles of this invention.

### DETAILED DESCRIPTION

The embodiments described herein with reference to the Figures advantageously provide increased plant efficiencies greater than 65% in particular embodiments that employ recirculation features. Advantages provided by the recirculation features described herein include without limitation, an automatic supply of water to a reformer, negating the requirement for a separate water supply.

Other embodiments of the present invention are also contemplated, as noted in the discussion. The principles described herein can just as easily be applied for example, to comparable fuel-cell technologies that are not strictly solid-oxide fuel cells. A vast variety of waste heat recovery cycles and methods for integrating those cycles are also possible using the principles described herein.

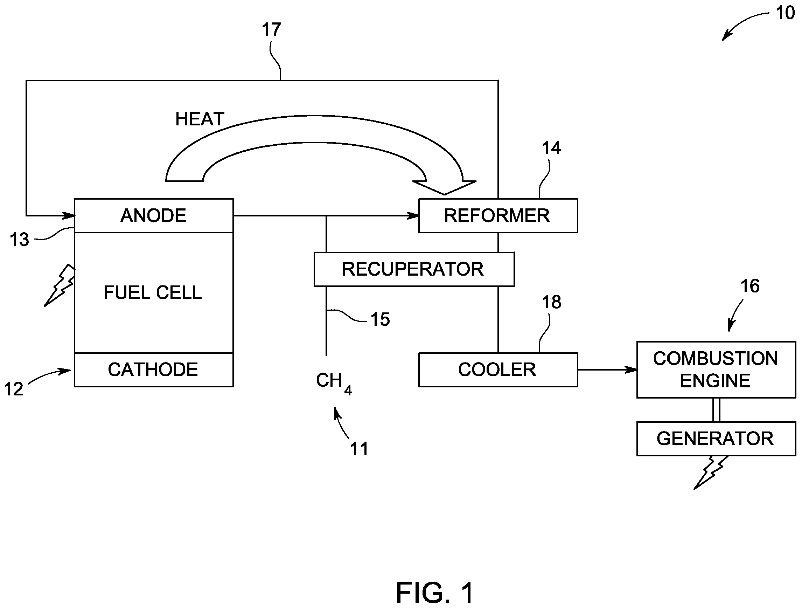

Figure 1 is a simplified diagram illustrating a combined cycle power plant 10 that employs a solid-oxide fuel cell (SOFC) 12 running on reformed fuel with recirculation in which a reformer 14 feeds a reciprocating engine bottoming cycle according to one embodiment. A hydrocarbon fuel 11 such as CH₄ is admitted to the system 10 downstream of the fuel cell anode 13 at point 15 depicted in Figure 1. The fuel 11 is partly or fully converted into H₂ and CO within the reformer 14, optionally using some portion of the heat given off by the fuel cell 12 to promote the reforming reaction. Some fraction of the reformed fuel stream is diverted to the inlet of the fuel cell anode 13 via a return path 17, and the residual fraction of the reformed fuel stream is employed to drive an external or internal combustion engine 16 that may comprise for example, without limitation, a reciprocating 4-stroke, reciprocating 2-stroke, opposed piston 2-stroke or gas turbine, subsequent to cooling via a transfer of heat within a recuperator to the incoming fuel stream 11, and then by means of a suitable cooler 18.

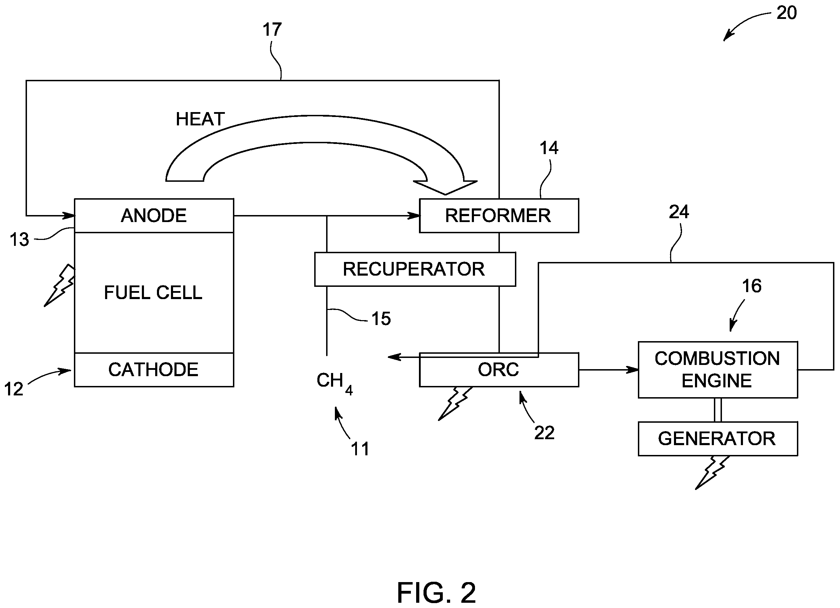

Figure 2 is a simplified diagram illustrating a combined cycle power plant 20 that employs a solid-oxide fuel cell (SOFC) 12 running on reformed fuel with recirculation in which a reformer 14 feeds a reciprocating engine bottoming cycle according to another embodiment. A hydrocarbon fuel 11 such as CH₄ is admitted to the system 20 downstream of the fuel cell anode 13 at point 15 depicted in Figure 2. The fuel 11 is partly or fully converted into H₂ and CO within the reformer 14, optionally using some portion of the heat given off by the fuel cell 12 to promote the reforming reaction. Some fraction of the reformed fuel stream is diverted to the inlet of the fuel cell anode 13 via a return path 17, and the residual fraction of the reformed fuel stream is cooled through heat removal, first during the process of warming the fuel stream 11 by means of a recuperator, and then as it passes through an Organic Rankine cycle (ORC) 22. The cooled fuel stream is then employed to drive an external or internal combustion engine 16 that may comprise for example, without limitation, a reciprocating 4-stroke, reciprocating 2-stroke, opposed piston 2-stroke or gas turbine.

According to one embodiment, the ORC 22 advantageously may be employed to generate additional electrical power. According to another embodiment, heat from the combustion engine 16 exhaust may be transferred to the working fluid of the ORC 22 via a return path 24 to further boost the production of electrical power provided by the ORC 22.

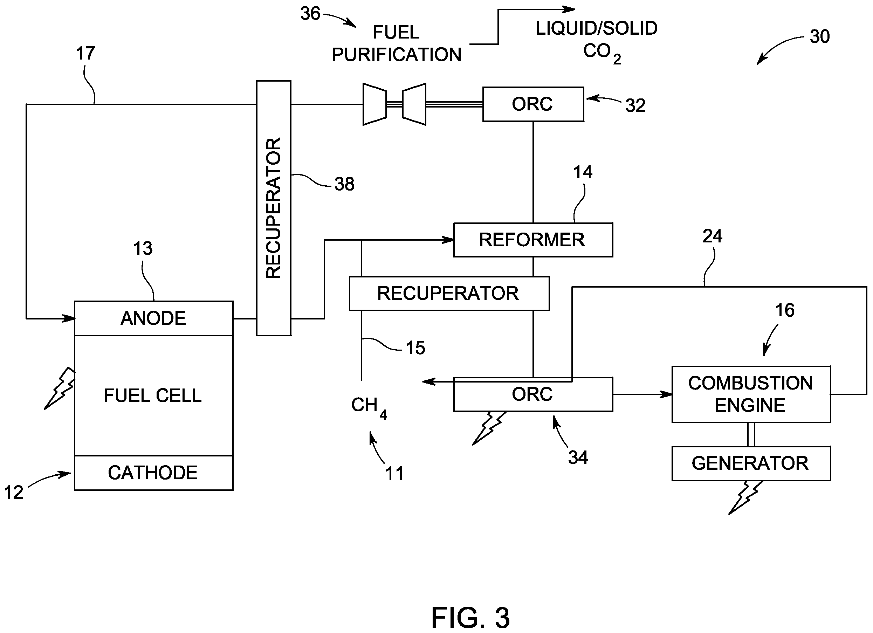

Figure 3 is a simplified diagram illustrating a combined cycle power plant 30 that employs a solid-oxide fuel cell (SOFC) 12 running on reformed fuel with recirculation in which a reformer 14 feeds a reciprocating engine bottoming cycle according to yet another embodiment. A hydrocarbon fuel 11 such as CH₄ is admitted to the system 30 downstream of the fuel cell anode 13 at point 15 depicted in Figure 3. The fuel 11 is partly or fully converted into H₂ and CO within the reformer 14, optionally using some portion of the heat given off by the fuel cell 12 to promote the reforming reaction. Some fraction of the reformed fuel stream is diverted to the inlet of the fuel cell anode 13 via a return path 17.

Prior to diverting/recirculating the fraction of the reformed fuel stream to the inlet of the fuel cell anode 13, the recirculated fraction is first cooled via an ORC 32 followed by fuel purification apparatus 36 that may comprise, without limitation, compression, heat rejection and expansion processes. The resulting cooling will cause the products of combustion, including H₂O and CO₂, to condense out of the resultant stream of fuel. The solid or liquid CO₂ may then be stored or pumped to high pressures in liquid form for eventual sequestration. This process is substantially driven by power derived in the ORC 34 from the heat of the recirculated 17 stream of fuel.

The residual fraction of the reformed fuel stream may optionally be cooled through heat removal as it passes through an Organic Rankine cycle (ORC) 34. This cooled fuel stream is then employed to drive an external or internal combustion engine 16 that may comprise for example, without limitation, a reciprocating 4-stroke, reciprocating 2-stroke, opposed piston 2-stroke or gas turbine.

According to one embodiment, the ORC 34 advantageously may be employed to generate additional electrical power. According to another embodiment, heat from the combustion engine 16 exhaust may be transferred to the working fluid of the ORC 34 via a return path 24 to further boost the production of electrical power provided by the ORC 34. According to another embodiment, a single ORC is employed to provide both recirculated and residual fuel streams.

Combined cycle power plant 30 further employs a recuperator 38. Reforming of the hydrocarbon primary fuel occurs upstream of the fuel cell in conventional combined cycle fuel cell systems as stated herein. In conventional combined cycle fuel cell systems, tail gas from the fuel cell including unburnt fuel and products of combustion are then sent to tailgas burners, the heat from which can be incorporated in the combined cycle system, sometimes into a fuel reformer. In contrast, the primary fuel 11 used in combined cycle power plant 30 is combined with the anode tailgas and sent to the reformer 14 downstream of the fuel cell 12. The endothermic reforming reaction is supplied heat from the anode tail gas directly and/or through a heat exchanger 38 and/or through a direct exchange of heat between the anode 13 and the reformer 14.

Combined cycle power plant 30 advantageously increases the fuel quality beyond that achievable using a convention combined cycle fuel cell system since the quality of the fuel stream exiting the reformer 14 is substantially greater than the tail gas leaving the fuel cell 13, in part because it is fully reformed. The fuel sent to a combustor for a bottoming cycle engine such as combustion engine 24 is thus fully reformed such that waste heat from the fuel cell 13 can be used as efficiently as possible. Further, the combined cycle power plant bottoming cycle advantageously requires less air flow for fuel cell cooling purposes due to full reforming of the fuel.

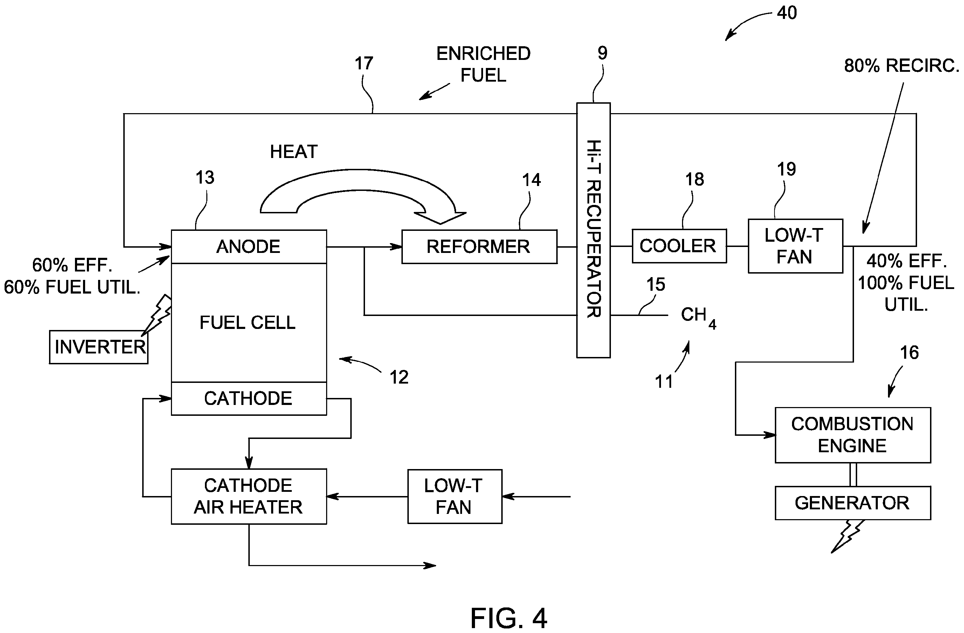

Figure 4 is a simplified diagram illustrating a combined cycle power plant 40 that employs a solid-oxide fuel cell (SOFC) 12 running on reformed fuel with recirculation in which a reformer 14 feeds a reciprocating engine bottoming cycle according to one embodiment. A hydrocarbon fuel 11 such as CH₄ is admitted to the system 40 downstream of the fuel cell anode 13 at point 15 depicted in Figure 1. The fuel 11 is partly or fully converted into H₂ and CO within the reformer 14, optionally using some portion of the heat given off by the fuel cell 12 to promote the reforming reaction. Some fraction of the reformed fuel stream is diverted to the inlet of the fuel cell anode 13 via a return path 17, and the residual fraction of the reformed fuel stream is employed to drive an external or internal combustion engine 16 that may comprise for example, without limitation, a reciprocating 4-stroke, reciprocating 2-stroke, opposed piston 2-stroke or gas turbine, subsequent to cooling via a transfer of heat within a high temperature recuperator 9 to the incoming fuel stream 11, and then by means of a suitable cooler 18 and a low temperature fan 19.

It can be appreciated that the use of low temperature fan 19 is advantageously less expensive than employing a high temperature fan that is more costly to employ. Low temperature fan 19 functions to ensure that recirculated flow of the reformed fuel stream occurs in a counter-clockwise motion as depicted in Figure 4. The high temperature recuperator 9 operates to remove heat from the flow going into the low-temperature fan 19. This heat is then transferred into the flow coming out of the low-temperature fan 19. These features advantageously allow recirculation of a high-temperature fuel stream back to the fuel cell 12 while imparting a motive force to the flow at low temperature. As can be seen in Figure 4, the recuperator 9 is also employed to heat the incoming natural gas fuel stream 11.

The embodiments described herein advantageously have achieved overall fuel utilization higher than 65% by recirculating flow from the anode exhaust back to the anode inlet. Further, by including the reforming step in a recirculation loop, the reformer water requirements can be met using only the water contained in the anode exhaust flow, without having to introduce additional water to the system 30.

The embodiments described herein advantageously implement reforming downstream of the fuel cell anode 13. Because the reforming step occurs at a point between the fuel cell 12 exhaust and the bottoming cycle fuel inlet, some of the reformed fuel may be fed directly to the bottoming cycle. The reformer 14 draws more heat from the fuel cell 12 because it is reforming the fuel supplied to the bottoming cycle, as well as that of the fuel cell 12. According to one aspect, the reformer 14 may be able to use more of the excess heat of the fuel cell 12 to enrich the fuel than would be possible in present state-of-the-art combined cycle fuel cell systems, thus increasing overall system efficiency.

The embodiments described herein advantageously employ a reciprocating gas engine as a bottoming cycle. Since reciprocating gas engines are traditionally more fuel-flexible than gas turbines, for example, they allow for more flexibility in the design of the reformer 14 than would be possible if a gas turbine were to be used as the bottoming cycle.

In summary explanation, combined cycle fuel cell embodiments and their attendant advantages have been described herein. These embodiments each comprise a solid-oxide fuel cell (SOFC) comprising an anode that generates a tail gas. A hydrocarbon fuel reforming system mixes a hydrocarbon fuel with the SOFC tail gas downstream of the SOFC partly or fully converts the hydrocarbon fuel into hydrogen (H₂) and carbon monoxide (CO). The reformed fuel is split into a first portion and a residual portion. A fuel path diverts the first portion of the reformed fuel to the inlet of the SOFC anode. A cooling system such as a cooler or cooler/low-temperature fan combination is optionally configured to remove heat from the residual portion of the reformed fuel and to deliver the cooled residual portion of the reformed fuel to a bottoming cycle comprising a reciprocating gas engine that is driven in response to the cooled residual portion of the reformed fuel.

While only certain features of the invention have been illustrated and described herein, many modifications and changes will occur to those skilled in the art. It is, therefore, to be understood that the appended claims are intended to cover all such modifications and changes as fall within the scope of the invention.

## Claims

1. A combined cycle fuel cell, comprising:
a fuel cell (12) comprising an anode (13) configured to generate heat, the anode comprising an inlet and an outlet;
a hydrocarbon fuel reforming system (14) configured to mix a hydrocarbon fuel with the fuel cell tail gas downstream of the fuel cell (12) and to partly or fully convert the hydrocarbon fuel into hydrogen (H₂) and carbon monoxide (CO) to generate a reformed fuel, and further configured to split the reformed fuel into a first portion and a residual portion;
a first Organic Rankine cycle (ORC) (32) configured to remove heat from the first portion of the reformed fuel;
a fuel purification apparatus (36), wherein the first ORC and fuel purification apparatus are together configured to generate purified fuel via removal of water and carbon dioxide from the first portion of reformed fuel;
a recuperator (38) configured to extract heat from the purified fuel and transfer the extracted heat to the fuel and tail gas entering the reformer;
a fuel path (17) configured to divert the purified fuel to the inlet of the fuel cell anode (13);
a second ORC (34) configured to remove heat from the residual portion of the reformed fuel and generate electrical power therefrom; and
a bottoming cycle comprising an external or internal combustion engine (16) driven in response to the cooled residual portion of the reformed fuel exiting the second ORC.

2. The combined cycle fuel cell according to claim 1 , wherein the fuel cell comprises a solid-oxide fuel cell (12).

3. The combined cycle fuel cell according to claim 1 or 2, further comprising a corresponding working fluid configured to generate electrical power.

4. The combined cycle fuel cell according to claim 3, wherein the bottoming cycle is configured to transfer heat to the first ORC working fluid to increase the production of electrical power generated via the first ORC.

5. The combined cycle fuel cell according to claim 1, wherein the combustion engine (16) comprises one of: a reciprocating gas engine, and a gas turbine.

6. The combined cycle fuel cell according to claim 1, wherein the second ORC and fuel purification apparatus are together configured to generate purified fuel via removal of water and carbon dioxide from the first portion of reformed fuel prior to diverting the first portion of the reformed fuel to the inlet of the anode (13).

7. The combined cycle fuel cell according to claim 1, wherein the first ORC (32) and the second ORC (34) are together integrated as a single ORC configured to both remove heat from the first portion of the reformed fuel and to remove heat from the residual portion of the reformed fuel and generate electrical power therefrom.

8. The combined cycle fuel cell according to claim 1, wherein the bottoming cycle is configured to transfer heat to the second ORC (34) working fluid to increase the production of electrical power generated via the second ORC.

## Patentansprüche

1. Kombibrennstoffzelle, umfassend:
eine Brennstoffzelle (12), umfassend eine Anode (13), die konfiguriert ist, Wärme zu erzeugen, wobei die Anode einen Einlass und einen Auslass umfasst;
ein Kohlenwasserstoffbrennstoff-Reformierungssystem (14), das konfiguriert ist, einen Kohlenwasserstoffbrennstoff mit dem Brennstoffzellenendgas stromabwärts der Brennstoffzelle (12) zu mischen und den Kohlenwasserstoffbrennstoff teilweise oder vollständig in Wasserstoff (H₂) und Kohlenmonoxid (CO) umzuwandeln, um einen reformierten Brennstoff zu erzeugen, und weiter konfiguriert ist, den reformierten Brennstoff in einen ersten Abschnitt und einen Restabschnitt aufzuteilen;
einen ersten Organic Rankine Cycle (ORC) (32), der konfiguriert ist, Wärme aus dem ersten Abschnitt des reformierten Brennstoffs zu entfernen;
eine Brennstoffreinigungsvorrichtung (36), wobei der erste ORC und die Brennstoffreinigungsvorrichtung gemeinsam konfiguriert sind, gereinigten Brennstoff durch Entfernen von Wasser und Kohlendioxid aus dem ersten Abschnitt von reformiertem Brennstoff zu erzeugen;
einen Wärmetauscher (38), der konfiguriert ist, Wärme aus dem gereinigten Brennstoff zu extrahieren und die extrahierte Wärme zu dem Brennstoff und Endgas zu übertragen, die in den Reformer eintreten;
einen Brennstoffweg (17), der konfiguriert ist, den gereinigten Brennstoff zum Einlass der Brennstoffzellenanode (13) umzulenken;
einen zweiten ORC (34), der konfiguriert ist, Wärme aus dem Restabschnitt des reformierten Brennstoffs zu entfernen und daraus elektrischen Strom zu erzeugen; und
einen Bottoming Cycle, umfassend eine externe oder interne Verbrennungskraftmaschine (16), die in Antwort auf den gekühlten Restabschnitt des reformierten Brennstoffs, der aus dem zweiten ORC austritt, angetrieben wird.

2. Kombibrennstoffzelle nach Anspruch 1, wobei die Brennstoffzelle eine Festoxidbrennstoffzelle (12) umfasst.

3. Kombibrennstoffzelle nach Anspruch 1 oder 2, weiter umfassend ein entsprechendes Arbeitsfluid, das konfiguriert ist, elektrischen Strom zu erzeugen.

4. Kombibrennstoffzelle nach Anspruch 3, wobei der Bottoming Cycle konfiguriert ist, Wärme zum ersten ORC-Arbeitsfluid zu übertragen, um die Produktion von elektrischem Strom zu erhöhen, der über den ersten ORC erzeugt wird.

5. Kombibrennstoffzelle nach Anspruch 1, wobei der Verbrennungskraftmaschine (16) eines umfasst von: einer Gaskolbenmaschine und einer Gasturbine.

6. Kombibrennstoffzelle nach Anspruch 1, wobei der zweite ORC und die Brennstoffreinigungsvorrichtung gemeinsam konfiguriert sind, gereinigten Brennstoff durch Entfernung von Wasser und Kohlendioxid aus dem ersten Abschnitt von reformiertem Brennstoff vor Umlenken des ersten Abschnitts des reformierten Brennstoffs zum Einlass der Anode (13) zu erzeugen.

7. Kombibrennstoffzelle nach Anspruch 1, wobei der erste ORC (32) und der zweite ORC (34) gemeinsam als ein einziger ORC integriert sind, konfiguriert, sowohl Wärme aus dem ersten Abschnitt des reformierten Brennstoffs zu entfernen wie auch Wärme aus dem Restabschnitt des reformierten Brennstoffs zu entfernen und daraus elektrischen Strom zu erzeugen.

8. Kombibrennstoffzelle nach Anspruch 1, wobei der Bottoming Cycle konfiguriert ist, Wärme zum zweiten ORC- (34) Arbeitsfluid zu übertragen, um die Produktion vom elektrischen Strom zu erhöhen, der über den zweiten ORC erzeugt wird.

## Revendications

1. Pile à combustible à cycle combiné, comprenant :
une pile à combustible (12) comprenant une anode (13) configurée de façon à générer de la chaleur, l'anode comprenant une entrée et une sortie,
un système de reformage d'un combustible hydrocarbure (14) configuré pour mélanger un carburant hydrocarbure avec un gaz de queue de la pile à combustible en aval de la pile à combustible (12) et pour convertir partiellement ou complètement le carburant hydrocarbure en hydrogène (H₂) et en monoxyde de carbone (CO) pour générer un carburant reformé, et configuré en outre pour diviser le carburant reformé en une première portion et une portion résiduelle ;
un premier cycle organique de Rankine (ORC) (32) configuré pour éliminer de la chaleur de la première portion du carburant reformé ;
un appareil de purification de carburant (36), dans lequel le premier ORC et l'appareil de purification de carburant sont configurés conjointement pour générer un carburant purifié via un retrait d'eau et de dioxyde de carbone de la première portion de carburant reformé ;
un récupérateur (38) configuré pour extraire de la chaleur du carburant purifié et transférer la chaleur extraite au carburant et au gaz de queue entrant dans le reformeur ;
une voie de carburant (17) configurée pour dévier le carburant purifié vers l'entrée de l'anode de la pile à combustible (13) ;
un second ORC (34) configuré pour retirer de la chaleur de la portion résiduelle du carburant reformé et générer une énergie électrique à partir de celui-ci ; et
un cycle de diminution comprenant un moteur à combustion externe ou interne (16) entraîné en réponse à la sortie de la portion résiduelle refroidie du carburant reformé du second ORC.

2. Pile à combustible à cycle combiné selon la revendication 1, dans laquelle la pile à combustible comprend une pile à combustible solide-oxyde (12).

3. Pile à combustible à cycle combiné selon la revendication 1 ou 2, comprenant en outre un fluide de travail correspondant configuré pour générer une énergie électrique.

4. Pile à combustible à cycle combiné selon la revendication 3, dans laquelle le cycle de diminution est configuré pour transférer de la chaleur au fluide de travail du premier ORC pour augmenter la production d'énergie électrique générée via le premier ORC.

5. Pile à combustible à cycle combiné selon la revendication 1, dans laquelle le moteur à combustion (16) comprend l'un parmi : un moteur à gaz alternatif, et une turbine à gaz.

6. Pile à combustible à cycle combiné selon la revendication 1, dans laquelle le second ORC et un appareil de purification de carburant sont configurés conjointement pour générer un carburant purifié via un retrait d'eau et de dioxyde de carbone à partir de la première portion de carburant reformé avant de dévier la première portion du carburant reformé vers l'entrée de l'anode (13).

7. Pile à combustible à cycle combiné selon la revendication 1, dans laquelle le premier ORC (32) et le second ORC (34) sont conjointement intégrés en tant qu'ORC unique configuré pour retirer à la fois de la chaleur de la première portion du carburant reformé et pour retirer de la chaleur de la portion résiduelle du carburant reformé et générer de l'énergie électrique à partir de celui-ci.

8. Pile à combustible à cycle combiné selon la revendication 1, dans laquelle le cycle de diminution est configuré pour transférer de la chaleur au fluide de travail du second ORC (34) pour augmenter la production d'énergie électrique générée via le second ORC.
